# EUROPÄISCHE PATENTSCHRIFT

(11) **EP 0 794 715 B1**
(45) Veröffentlichungstag und Bekanntmachung des Hinweises auf die Patenterteilung: **28.10.1998**
(21) Anmeldenummer: 95938342.3
(22) Anmeldetag: 17.11.1995
(51) Int. Cl.: A47B 21/00

(54) **BILDSCHIRMARBEITSPLATZ**
SCREEN WORKPLACE
MODULE DE VISUALISATION POUR POSTE DE TRAVAIL

(30) Priorität: 30.11.1994 DE 4442676
(43) Veröffentlichungstag der Anmeldung: 17.09.1997
(73) Patentinhaber: SIEMENS AKTIENGESELLSCHAFT, 80333 München (DE)
(72) Erfinder: BÖHMER, Gerhard, D-91466 Gerhardshofen (DE)
(86) Internationale Anmeldenummer: DE9501606
(87) Internationale Veröffentlichungsnummer: WO9616574

(56) Entgegenhaltungen:
- EP-A- 0 382 514
- DE-A- 3 603 465
- DE-A- 3 934 859
- DE-B- 2 438 629

## Beschreibung

Die Erfindung bezieht sich auf einen Bildschirmarbeitsplatz, insbesondere für die Leitwarte einer Kraftwerksanlage.

In modernen Kraftwerksanlagen kommt zur Überwachung und Steuerung kraftwerksspezifischer Vorgänge üblicherweise ein computergestütztes Leittechniksystem zum Einsatz. Die Kraftwerksprozesse werden dabei von einer zentralen Rechnereinheit oder von einem Rechnernetzwerk gesteuert. Das Bedienpersonal der Kraftwerksanlage hat mittels sogenannter X-Terminals oder mittels Personal-Computern Zugriff auf die zentrale Rechnereinheit bzw. das Rechnernetzwerk. Die X-Terminals und auch die Personal-Computer umfassen dabei einen Bildschirm zur Darstellung von Informationen sowie eine Tastatur und/oder eine Maus oder einen Lichtgriffel zur Dateneingabe. Zur Installation derartiger Informations-Verarbeitungssysteme ist geeignetes Mobiliar erforderlich. Dabei muß sowohl ergonomischen Aspekten, die die Bedienbarkeit der Rechnerelemente gewahrleisten, wie auch sicherheitstechnischen Aspekten, beispielsweise der Vermeidung von zusätzlichen Gefahrenquellen für das Bedienpersonal aufgrund unsachgemäß verstauter Anschluß- oder Verbindungskabel der Rechnerelemente, Rechnung getragen werden. Bei herkömmlichen, für die Arbeit mit X-Terminals oder Personal-Computern hergerichteten Bedienpulten ist dabei insbesondere die Standfestigkeit oder Kipp- und Neigefestigkeit nur unbefriedigend.

Der Erfindung liegt daher die Aufgabe zugrunde, einen Bildschirmarbeitsplatz, insbesondere für die Leitwarte einer Kraftwerksanlage, in ergonomischer Bauweise derart auszugestalten, daß Mängel der obengenannten Art vermieden sind.

Diese Aufgabe wird erfindungsgemäß gelöst durch einen Bildschirmarbeitsplatz mit einer Anzahl von aufgabenspezifisch angepaßten und miteinander verbindbaren Pultmodulen, wobei mindestens ein, vorzugsweise jedes, Pultmodul in seinem Fußbereich einen Rohrrahmen und/oder eine Kabeldurchführung aufweist.

Die Erfindung geht dabei von der Überlegung aus, daß durch die Bereitstellung von aufgabenspezifisch angepaßten Pultmodulen für jedes Rechnerelement, wie zum Beispiel X-Terminals, Personal-Computer oder Drucker, einschließlich der für das Rechnerelement benötigten Peripheriegeräte, wie zum Beispiel Bildschirm, Tastatur oder Maus, eine sinnvolle Anordnung der benötigten Gerätschaften ermöglicht wird, wobei auf diese Weise die benötigten Kabel oder Leitungen sachgemäß verlegt werden können. Durch eine geeignete Verbindung der Pultmodule miteinander wird eine hohe Standfestigkeit des somit geschaffenen Bildschirmarbeitsplatzes, insbesondere gegen Kippen oder Neigen, erreicht.

Für eine sachgemäße Anordnung von Kabeln oder Zuleitungen der Rechnerelemente weist dabei ein oder jedes Pultmodul des Bildschirmarbeitsplatzes in seinem Fußbereich eine Kabeldurchführung auf. Zudem weist mindestens ein, vorzugsweise jedes, Pultmodul in seinem Fußbereich einen Rohrrahmen auf. Dabei überträgt der Rohrrahmen Gewichtskräfte von der Tischplatte des Pultmoduls direkt auf den Fußboden und verleiht dem Bildschirmarbeitsplatz somit große Stabilität. Zur weiteren Erhöhung der Stabilität sowie zur Vermeidung von Kippen oder Neigen des Bildschirmarbeitsplatzes ist der oder jeder Rohrrahmen vorteilhafterweise ortsfest verschraubbar.

Ein modulares Möbelsystem an sich ist zwar aus der EP-A-0 382 514 bekannt. Dieses Möbelsystem ist jedoch nicht für eine Verwendung als Bildschirmarbeitsplatz vorgesehen. Daher ist bei einem Modul diese Möbelsyystems auch kein Rohrrahmen und keine Kabeldurchführung in seinem Fußbereich vorgesehen.

Für die Unterbringung eines X-Terminals in einem derartigen Bildschirmarbeitsplatz umfaßt dieser zweckmäßigerweise ein Bildschirmpultmodul mit mindestens einem von der Pultrückseite her zugänglichen und mittels einer horizontal befestigten Klappe verschließbaren Fach. Das verschließbare Fach dient dabei vorteilhafterweise der Aufnahme der Tastatur, die üblicherweise nur bei seltenen Gelegenheiten, beispielsweise bei der Inbetriebsetzung des Leittechniksystems, benötigt wird. Ansonsten kann die Tastatur einschließlich aller ihrer Kabel oder Leitungen in dem verschließbaren Fach gelagert sein, so daß sie keine zusätzliche Behinderung darstellt und darüber hinaus geschützt ist. Vorteilhafterweise umfaßt das Bildschirmpultmodul ein weiteres Fach zur Aufnahme des X-Terminals.

In zweckmäßiger Ausgestaltung umfaßt der Bildschirmarbeitsplatz ein Rechnerpultmodul, in dessen Fußbereich ein Einbaurahmen zur Aufnahme eines Einschubes vorgesehen ist. Das Rechnerpultmodul weist dabei ein Fach zur Aufnahme eines Rechnerelements, zum Beispiel eines Personal-Computers, auf. Um den Personal-Computer mit einer zentralen Rechnereinheit verknüpfen zu können, ist ein Datentransfereinschub notwendig. Ein derartiger Datentransfereinschub kann in den im Fußbereich des Rechnerpultmoduls vorgesehenen Einbaurahmen eingesetzt werden.

Trotz des hohen Automatisierungsgrades der Leittechnik einer Kraftwerksanlage muß aus Sicherheitsgründen beispielsweise eine Schnell- oder Notabschaltung der Anlage mit manuellen Schaltern möglich sein. Um derartige Schalter in den Bildschirmarbeitsplatz integrieren zu können, ist vorzugsweise ein Kontrollpultmodul vorgesehen, das in seinem Tischplattenbereich ein Mosaikelement, insbesondere zur Aufnahme von Tastschaltern, aufweist.

Zu Protokollierungszwecken ist zweckmäßigerweise ein Druckerpultmodul mit einem durch mindestens eine Tür verschließbaren Fach zur Aufnahme mindestens eines Druckers vorgesehen.

Um die Pultmodule miteinander verbinden zu können, weist zweckmäßigerweise jedes Bildschirmpultmodul, jedes Rechnerpultmodul und jedes Kontrollpultmodul an seinen Seitenwänden Befestigungselemente auf.

Um dem Bildschirmarbeitsplatz variable Form zu geben und ihn somit an sein Umfeld individuell anpassen zu können, sind vorzugsweise ein oder mehrere mindestens annähernd trapezförmige Eckverbindungsmodule vorgesehen. An zwei der Seiten jedes Eckverbindungsmoduls sind zweckmäßigerweise Befestigungselemente zur Verbindung mit jeweils einem Pultmodul vorgesehen.

Die mit der Erfindung erzielten Vorteile bestehen insbesondere darin, daß durch den Aufbau des Bildschirmarbeitsplatzes aus aufgabenspezifisch angepaßten, miteinander verbindbaren Pultmodulen eine hohe Standfestigkeit des Bildschirmarbeitsplatzes bei gleichzeitiger fachgerechter Unterbringung der für den Bildschirmarbeitsplatz erforderlichen Rechnerelemente gewährleistet ist.

Ein Ausführungsbeispiel der Erfindung wird anhand einer Zeichnung näher erläutert. Darin zeigen:
Figur 1 ein Bildschirmpultmodul in Frontansicht,
Figur 2 ein Bildschirmpultmodul in Draufsicht,
Figur 3 ein Bildschirmpultmodul im Schnitt,
Figur 4 ein Rechnerpultmodul in Frontsicht,
Figur 5 ein Rechnerpultmodul in Aufsicht,
Figur 6 ein Rechnerpultmodul im Schnitt,
Figur 7 ein Kontrollpultmodul in Frontsicht,
Figur 8 ein Kontrollpultmodul in Draufsicht,
Figur 9 ein Kontrollpultmodul im Schnitt,
Figur 10 ein Druckerpultmodul in Frontsicht,
Figur 11 ein Druckerpultmodul in Aufsicht,
Figur 12 ein Druckerpultmodul im Schnitt,
Figur 13 ein Eckverbindungsmodul, und
Figur 14 einen Bildschirmarbeitsplatz in Draufsicht.

Einander entsprechende Bauteile sind in allen Figuren mit den gleichen Bezugszeichen versehen.

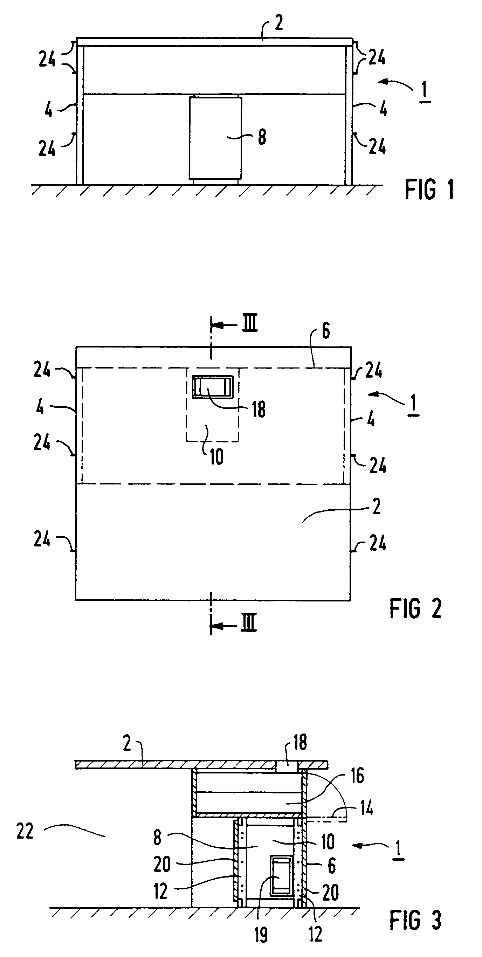

Ein Bildschirmpultmodul 1 gemäß den Figuren 1, 2 und 3 umfaßt eine Tischplatte 2, Seitenwände 4 und eine Rückwand 6. Ein Fußbereich 8 des Bildschirmpultmoduls 1 weist eine Kabeldurchführung 10 und einen Rohrrahmen 12 auf. Der Rohrrahmen 12 ist dabei aus Vierkantrohren zusammengesetzt. Er kann aber auch aus Rundrohren zusammengesetzt sein. Unterhalb der Tischplatte 2 sind mit horizontal befestigten Klappen 14 verschließbare Fächer 16 angeordnet, von denen nur eines sichtbar ist. Die Fächer 16 dienen beispielsweise zur Aufnahme einer Tastatur oder eines X-Terminals. In der Tischplatte 2 und im Fußbereich 8 des Bildschirmpultmoduls 1 sind Kabeldurchführungsöffnungen 18 bzw. 19 vorgesehen.

In dem Bildschirmpultmodul 1 können die erforderlichen Gerätschaften, wie beispielsweise X-Terminals, Tastatur, Bildschirm und eine Computer-Maus, sachgerecht und sicher untergebracht werden. Die Tischplatte 2 ist dabei in vorteilhafterweise derart dimensioniert, daß eine ergonomische Auslegung des Bildschirmarbeitsplatzes erreicht ist. Der Abstand zwischen Bildschirm und Bediener ist auf den erforderlichen Wert zur Mausbedienung konzipiert. Nicht dargestellte Anschlußleisten oder Steckdosen sind im Fußbereich 8 untergebracht und stören somit den Bediener nicht. Der Fußbereich 8 ist in vorteilhafter Weise vorder- und rückseitig mit Stecktüren 20 verschließbar, so daß gültige Sicherheitsvorschriften für elektrische Einrichtungen eingehalten sind. Durch die Unterbringung von selten benötigten Tastaturen oder Bildschirmsteuergeräten in dem rückwärtig angeordneten Fach 16 ist der Bedienplatz von Geräten freigehalten, die nicht unmittelbar mit der Prozeßbedienung in Verbindung stehen. Elektrische Geräte, die auf der Tischplatte 2 aufzustellen sind, können in nicht näher dargestellter Art und Weise über ein Kabelset in der Tischplatte 2 mit Anschlußleisten oder Steckdosen im Fußbereich 8 verkabelt werden.

Der Rohrrahmen 12 ist in vorteilhafter Weise ortsfest verschraubbar. Somit wird das Bildschirmpultmodul 1 ortsfest fixiert, so daß ein Kippen oder Neigen vermieden ist. Im Bodenraum 22 unterhalb der Tischplatte 2 und vor dem Fußbereich 8 ist die Beinfreiheit für das Bedienpersonal sichergestellt, indem Rechnergeräte im Inneren des Fußbereichs 8 oder im Fach 16 untergebracht sind.

Zur Verbindung des Bildschirmpultmoduls 1 mit anderen, im folgenden beschriebenen Pultmodulen sind zweckmäßigerweise an den Seitenwänden 4 und an der Tischplatte 2 Befestigungselemente 24 vorgesehen. Die Befestigungselemente 24 können zum Beispiel Schrauben oder Bolzen sein.

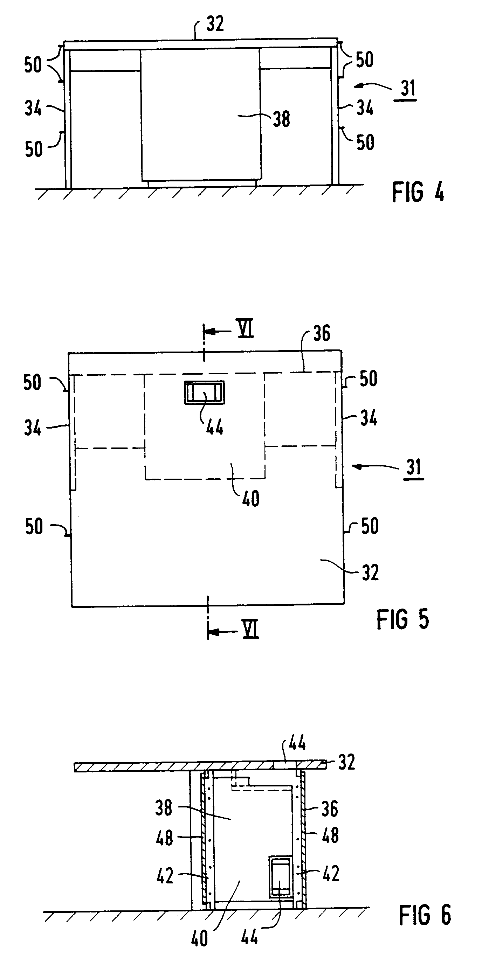

Analog zum Bildschirmpultmodul 1 gemäß den Figuren 1, 2 und 3 ist ein Rechnerpultmodul 31 gemäß den Figuren 4, 5 und 6 aufgebaut. Das Rechnerpultmodul 31 umfaßt eine Tischplatte 32, Seitenwände 34 und eine Rückwand 36. Im Fußbereich 38 sind ebenfalls eine Kabeldurchführung 40 und ein Rohrrahmen 42 vorgesehen. Mittels dieses Rohrrahmens 42 ist das Rechnerpultmodul 31 wiederum ortsfest verschraubbar. Der Fußbereich 38 ist dabei in seiner Breite derart dimensioniert, daß die Aufnahme eines Einschubs ermöglicht ist. Insbesondere ist dabei die Aufnahme eines für Standardbauelemente ausgelegten 19-Zoll-Einschubs mit der Breite von etwa 574 mm vorgesehen.

In der Tischplatte 32 und im Fußbereich 38 des Rechnerpultmoduls 31 sind Kabeldurchführungsöffnungen 44 bzw. 46 vorgesehen. In vorteilhafter Weise ist der Fußbereich 38 des Rechnerpultmoduls 31 ebenfalls vorder- und/oder rückseitig mittels Stecktüren 48 verschließbar.

Das Rechnerpultmodul 31 weist an seiner Tischplatte 32 sowie an seinen Seitenwänden 34 Verbindungselemente 50 auf, die eine mechanische Verbindung verschiedener, unter anderem im folgenden beschriebenen Pultmodule untereinander ermöglichen. Das Rechnerpultmodul 31 ist frontseitig mit Computern bestuckbar, wobei deren Diskettenlaufwerke derart an der Vorderseite angeordnet werden können, daß ein problemloser und rascher Diskettenwechsel im Aktionsradius einer Bedienperson ermöglicht ist.

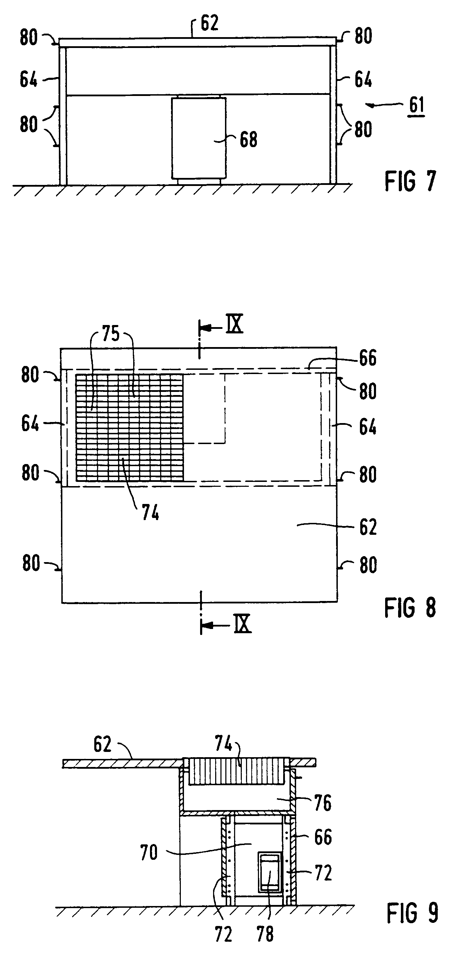

Ein Kontrollpultmodul 61 gemäß der Figuren 7, 8 und 9 umfaßt wiederum eine Tischplatte 62, Seitenwände 64 und eine Rückwand 66. Ein Fußbereich 68 des Kontrollpultmoduls 61 weist wiederum eine Kabeldurchführung 70 und einen Rohrrahmen 72 auf, mit dem das Kontrollpultmodul 61 ortsfest verschraubbar ist. In der Tischplatte 62 des Kontrollpultmoduls 61 ist ein Mosaikelement 74 angeordnet, das zur Aufnahme von mechanisch betätigbaren Schaltern, insbesondere von Tastschaltern 75, dient, die beispielsweise für eine Notabschaltung einer von der Leitwarte gesteuerten Anlage vorgesehen sind. Das Kontrollpultmodul 61 weist unterhalb des Mosaikelements 74 ein Fach 76 auf, in dem für die Verdrahtung des Mosaikelements 74 benötigte Kabel untergebracht werden können. An der Kabeldurchführung 70 ist eine Kabeldurchführungsöffnung 78 angeordnet.

Zur mechanischen Verbindung des Kontrollpultmoduls 61 mit den anderen Pultmodulen 1, 31 sind an seiner Tischplatte 62 und an seinen Seitenwänden 64 ebenfalls Verbindungselemente 80 vorgesehen.

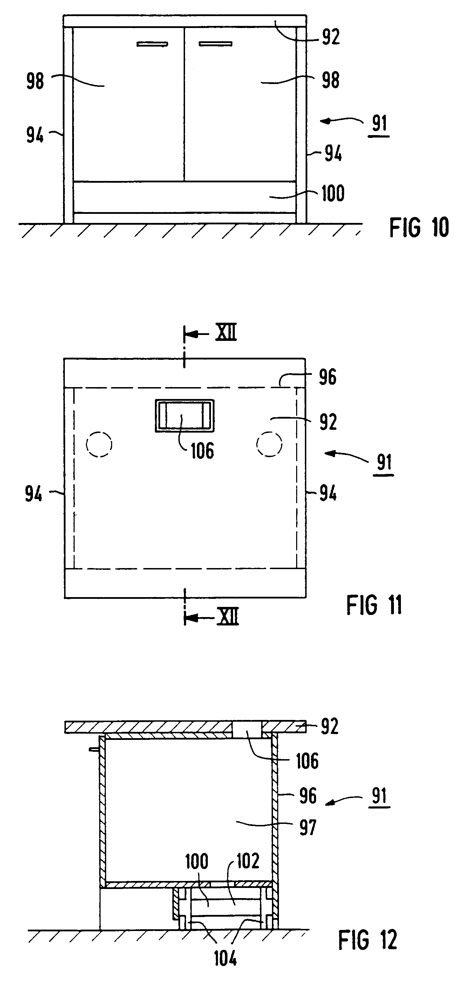

Ein Druckerpultmodul 91 gemäß den Figuren 10, 11 und 12 weist eine Tischplatte 92, Seitenwände 94 und eine Rückwand 96 auf. Die Vorderseite des Druckerpultmoduls 91 mit einem Druckerfach 97 ist mittels Türen 98 verschließbar. In einem Fußbereich 100 des Druckerpultmoduls 91 sind eine Kabeldurchführung 102 sowie ein Rohrrahmen 104 vorgesehen. Mittels des Rohrrahmens 104 ist auch das Druckerpultmodul 91 ortsfest verschraubbar. Die Tischplatte 92 des Druckerpultmoduls 91 weist eine Kabeldurchführungsöffnung 106 auf. Das Druckerpultmodul 91 ist als Unterbautisch für Hardcopygeräte oder Laserdrucker nutzbar. Alternativ kann das Druckerpultmodul 91 aber auch in nicht näher dargestellter Weise Papierspeicher- und Auffangvorrichtungen für Endlospapier aufweisen.

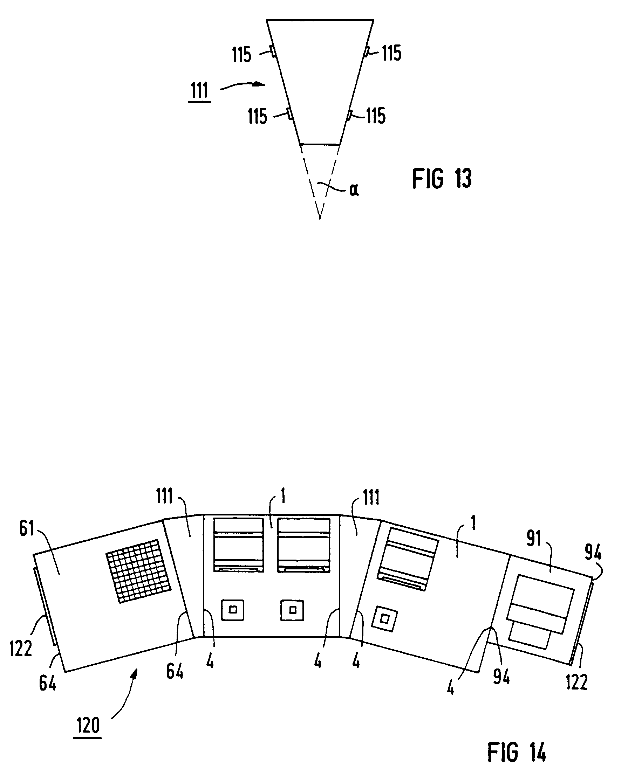

Ein annähernd trapezförmiges Eckverbindungsmodul 111 gemäß Figur 13 mit für eine Kombination mit den Pultmodulen 1, 31, 61, 91 dimensionierten Abmessungen weist zweckmäßigerweise an zwei seiner Seiten Befestigungselemente 115 auf. Vorteilhafterweise sind Eckverbindungsmodule 111 mit verschiedenem Öffnungswinkel α, insbesondere mit dem Öffnungswinkel α von 7,5°, 15° und 30°, bereitgestellt. Durch Kombination von Pultmodulen 1, 31, 61, 91 untereinander und mit den Eckverbindungsmodulen 111 sind vielfältige Anordnungen eines Bildschirmarbeitsplatzes möglich. Durch Eckverbindungsmodule 111 mit verschiedenem Öffnungswinkel α wird dabei in besonders vorteilhafter Weise eine besonders hohe Flexibilität für die Anordnung eines Bildschirmarbeitsplatzes erreicht.

Ein Bildschirmarbeitsplatz 120, insbesondere für die Leitwarte einer Kraftwerksanlage, umfaßt vorzugsweise mehrere, insbesondere vier, Pultmodule. Der Bildschirmarbeitsplatz 120 gemäß Figur 14 ist zusammengesetzt aus einem Kontrollpultmodul 61, zwei Eckverbindungsmodulen 111, zwei Bildschirmpultmodulen 1 und einem Druckerpultmodul 91. Die Module 1, 61, 91 sind dabei an ihren Seitenwänden 4, 64 bzw. 94 fest miteinander verbunden, so daß sie eine mechanische Einheit bilden. Somit ist eine besonders hohe Stabilität gegen Kippen oder Neigen erreicht. Um eine besonders günstige funktionale Flexibilität mit einer ausgeprägten Formschönheit zu vereinigen, sind an den nicht mit Modulen verbundenen Seitenteilen 64 und 94 Abschlußwangen 122 angeordnet.

## Patentansprüche

1. Bildschirmarbeitsplatz, insbesondere für die Leitwarte einer Kraftwerksanlage mit einer Anzahl von aufgabenspezifisch angepaßten und miteinander verbindbaren Pultmodulen (1, 31, 61, 91, 111), wobei mindestens ein, vorzugsweise jedes, Pultmodul (1, 31, 61, 91, 111) in seinem Fußbereich (8, 38, 68, 100) einen Rohrrahmen (12, 42, 72, 104) und/oder eine Kabeldurchführung (10, 40, 70, 102) aufweist.

2. Bildschirmarbeitsplatz nach Anspruch 1,
**dadurch gekennzeichnet,** daß der oder jeder Rohrrahmen (12, 42, 72, 104) ortsfest verschraubbar ist.

3. Bildschirmarbeitsplatz nach Anspruch 1 oder 2
**gekennzeichnet durch** ein Bildschirmpultmodul (1) mit mindestens einem von der Pultrückseite (6) her zugänglichen und mittels einer horizontal befestigten Klappe (14) verschließbaren Fach (16).

4. Bildschirmarbeitsplatz nach einem der Ansprüche 1 bis 3,
**gekennzeichnet durch** ein Rechnerpultmodul (31), dessen Fußbereich (38) zur Aufnahme eines Einschubs ausgelegt ist.

5. Bildschirmarbeitsplatz nach einem der Ansprüche 1 bis 4,
**gekennzeichnet durch** ein Kontrollpultmodul (61), das in seinem Tischplattenbereich (62) ein Mosaikelement (74), insbesondere zur Aufnahme von Tastschaltern (75), aufweist.

6. Bildschirmarbeitsplatz nach einem der Ansprüche 1 bis 5,
**gekennzeichnet durch** ein Druckerpultmodul (91) mit einem durch mindestens eine Tür (98) verschließbaren Druckerfach (97).

7. Bildschirmarbeitsplatz nach einem der Ansprüche 1 bis 6,
**dadurch gekennzeichnet,** daß das oder jedes Pultmodul (1, 31, 61, 91), an mindestens einer Seitenwand (4, 34, 64) Befestigungselemente (24, 50, 80) aufweist.

8. Bildschirmarbeitsplatz nach einem der Ansprüche 1 bis 7,
**gekennzeichnet durch** ein mindestens annähernd trapezförmiges Eckverbindungsmodul (111) mit an zwei seiner Seiten vorgesehenen Befestigungselementen (115) zur Verbindung mit jeweils einem der Pultmodule (1, 31, 61, 91).

## Claims

1. VDU workstation, in particular for the control room of a power station, having a number of console modules (1, 31, 61, 91, 111) which are adapted to specific tasks and connectable to one another, at least one, preferably each, console module (1, 31, 61, 91, 111) having in its foot region (8, 38, 68, 100) a tubular frame (12, 42, 72, 104) and/or a cable penetration point (10, 40, 70, 102).

2. VDU workstation according to claim 1,
characterized in that the, or each, tubular frame (12, 42, 72, 104) may be permanently screwed in position.

3. VDU workstation according to claim 1 or 2,
characterized by a display screen console module (1) having at least one compartment (16), which is accessible from the rear (6) of the console and closable by means of a horizontally fastened flap (14).

4. VDU workstation according to one of claims 1 to 3,
characterized by a computer console module (31) having a foot region (38), which is designed to accommodate a withdrawable module.

5. VDU workstation according to one of claims 1 to 4,
characterized by a supervision console module (61), which in its desktop region (62) has a mosaic element (74), in particular for accommodating momentarycontact switches (75).

6. VDU workstation according to one of claims 1 to 5,
characterized by a printer console module (91) having a printer compartment (97), which is closable by means of at least one door (98).

7. VDU workstation according to one of claims 1 to 6,
characterized in that the, or each, console module (1, 31, 61, 91) has fastening elements (24, 50, 80) on at least one side wall (4, 34, 64).

8. VDU workstation according to one of claims 1 to 7,
characterized by an at least approximately trapezoidal corner connection module (111), which on two of its sides is provided with fastening elements (115) for connection to, in each case, one of the console modules (1, 31, 61, 91).

## Revendications

1. Poste de travail vidéo, notamment pour la salle de contrôle d'une centrale électrique, lequel poste comporte une pluralité de modules formant pupitres (1, 31, 61, 91, 111), adaptés à des tâches spécifiques et propres à être reliés entre eux, tandis qu'au moins un et, de préférence, chaque module formant pupitre (1, 31, 61, 91, 111) présente, dans sa partie pied (8, 38, 68, 100), un châssis tubulaire (12, 42, 72, 104) et/ou un passe-câbles (10, 40, 70, 102).

2. Poste de travail vidéo selon la revendication 1, caractérisé par le fait que le ou chaque châssis tubulaire (12, 42, 72, 104) peut être fixé à demeure par vissage.

3. Poste de travail vidéo selon la revendication 1 ou 2, caractérisé par un module formant pupitre pour écran (1), avec au moins un casier (16) accessible depuis l'arrière (6) du pupitre et pouvant être fermé au moyen d'un abattant (14) fixé horizontalement.

4. Poste de travail vidéo selon l'une des revendications 1 à 3, caractérisé par un module formant pupitre pour ordinateur (31), dont la partie pied (38) est conçue pour loger un tiroir enfichable.

5. Poste de travail vidéo selon l'une des revendications 1 à 4, caractérisé par un module formant pupitre de contrôle (61), qui présente, dans sa partie plateau (62), un élément mosaïque (74), destiné notamment à loger des interrupteurs à couches (75).

6. Poste de travail vidéo selon l'une des revendications 1 à 5, caractérisé par un module formant pupitre pour imprimante (91) comportant un casier d'imprimante (97) à fermer par au moins une porte (98).

7. Poste de travail vidéo selon l'une des revendications 1 à 6, caractérisé par le fait que le ou chaque module formant pupitre (1, 31, 61, 91) présente, sur au moins une paroi latérale (4, 34, 64), des éléments de fixation (24, 50, 80).

8. Poste de travail vidéo selon l'une des revendications 1 à 7, caractérisé par un module d'assemblage d'angle (111) de forme au moins approximativement trapézoïdale et dont deux côtés comportent des éléments de fixation (115) pour l'assemblage avec chaque fois l'un des modules formant pupitres (1, 31, 61, 91).
